(19) **Europäisches Patentamt**

**European Patent Office**

**Office européen des brevets**

(11) **EP 1 083 355 B1**

(12) **EUROPEAN PATENT SPECIFICATION**

(45) Date of publication and mention
of the grant of the patent:
**29.01.2003 Bulletin 2003/05**

(51) Int Cl.⁷: **F16D 3/74**, F16D 3/68

(21) Application number: **00118257.5**

(22) Date of filing: **04.09.2000**

(54) **Flexible coupling for coaxial shafts**

Elastische Kupplung für koaxiale Wellen

Accouplement flexible pour arbres coaxiaux

(84) Designated Contracting States:
**DE ES FR**

(30) Priority: **10.09.1999 IT PD990201**

(43) Date of publication of application:
**14.03.2001 Bulletin 2001/11**

(73) Proprietor: **ANTONIO CARRARO S.p.A.**
**35011 Campodarsego (Padova) (IT)**

(72) Inventor: **Martignon, Girolamo**
**35010 Borgoricco, (Prov. of Padova) (IT)**

(74) Representative: **Modiano, Guido, Dr.-Ing. et al**
**Modiano & Associati SpA**
**Via Meravigli, 16**
**20123 Milano (IT)**

(56) References cited:
**CH-A- 215 269**          **US-A- 3 902 333**
**US-A- 4 373 925**        **US-A- 5 908 355**

## Description

The present invention relates to a flexible coupling for the transmission of motion between coaxial shafts.

Flexible couplings for the transmission of the motion of coaxial shafts are known and can have the most disparate constructive embodiments.

There are couplings with vulcanized. rubber elements obtained by vulcanizing directly the elastic rubber element onto the two coupling halves, which are rigidly coupled to the shafts or onto elements directly connected to said coupling halves; couplings with removable rubber elements, which differ from the preceding types merely because the elastic rubber element is connected to the two coupling halves so that it can be removed; couplings with axial pins with an elastic covering, which are substantially constituted by two disks having a hub keyed to the ends of the shafts and which alternatively support, in a cantilevered arrangement, the axial pins that engage the facing holes formed in the other disk by means of a rubber block; couplings with compressed elastic blocks, by virtue of which torque transmission occurs through rubber elements which are compressed between appropriate protrusions formed in the two facing coupling halves; friction couplings, in which the elastic rubber element transmits the loads to the shafts or to the coupling halves merely by friction, having been precompressed during assembly.

Flexible couplings are particularly adapted for the transmission of the motion of coaxial shafts but nonetheless also withstand small displacements and misalignments of said shafts; in other words, they are also adapted for shafts not perfectly aligned.

Their main characteristic, however, is that couplings of this category are able to considerably dampen load peaks and to attenuate vibrations.

In this manner, the impacts between the elements of the transmission are reduced, ensuring their higher efficiency and durability.

Moreover, the damping effect leads to a substantial reduction in the level of acoustic pressure generated by the various moving parts and accordingly is closer to more ergonomic environmental conditions.

The main limitation of conventional flexible couplings is that they do not allow the transmission of motion between two shafts according to a preset progression rule, since it is known that only torsional rigidity increases as the torque increases.

Moreover, the axial bulk and the overall volume are sometimes excessive.

United States Patent No. 5908355 disclose a flexible coupling comprising two hubs having a plurality of receptacles and a flexible belt having a plurality of projections received in said receptacles.

Swiss Patent No. 215269 discloses a flexible coupling for coaxial shafts, comprising two facing flanges, one for the driven shaft and one for the driving shaft;

blocks of elastomeric material which are rigidly coupled between said flanges, have a substantially triangular shape, are arranged radially, and are fixed to a flange so that one vertex is directed toward the center of said flange; the other one of said flanges being shaped so as to form recesses for mating with said downward-facing vertices of the elastomeric blocks.

The aim of the present invention is to eliminate the above noted drawbacks of conventional flexible couplings, by providing a coupling which allows the transmission of motion between two shafts according to a preset progression rule.

An object is to provide a coupling in which it is possible to vary the trend of said rule simply by varying the geometry of the elastic elements.

Another object is to provide a coupling which is smaller than couplings of equal power handling capacity and in particular has a smaller axial bulk.

Another object is to provide a flexible coupling which has low manufacturing costs.

These and other objects are achieved by a flexible coupling according to claim 1.

Further characteristics and advantages of the invention will become better apparent from the description of a preferred but not exclusive embodiment of the coupling, illustrated only by way of non-limitative example in the accompanying drawings, wherein:

Figure 1 is a longitudinal sectional view of the flexible coupling according to the invention, taken along the line I-I of Figure 2;

Figure 2 is a transverse sectional view of the flexible coupling according to the invention, taken along the line II-II of Figure 1;

Figure 3 is a longitudinal sectional view of another embodiment of the flexible coupling according to the invention.

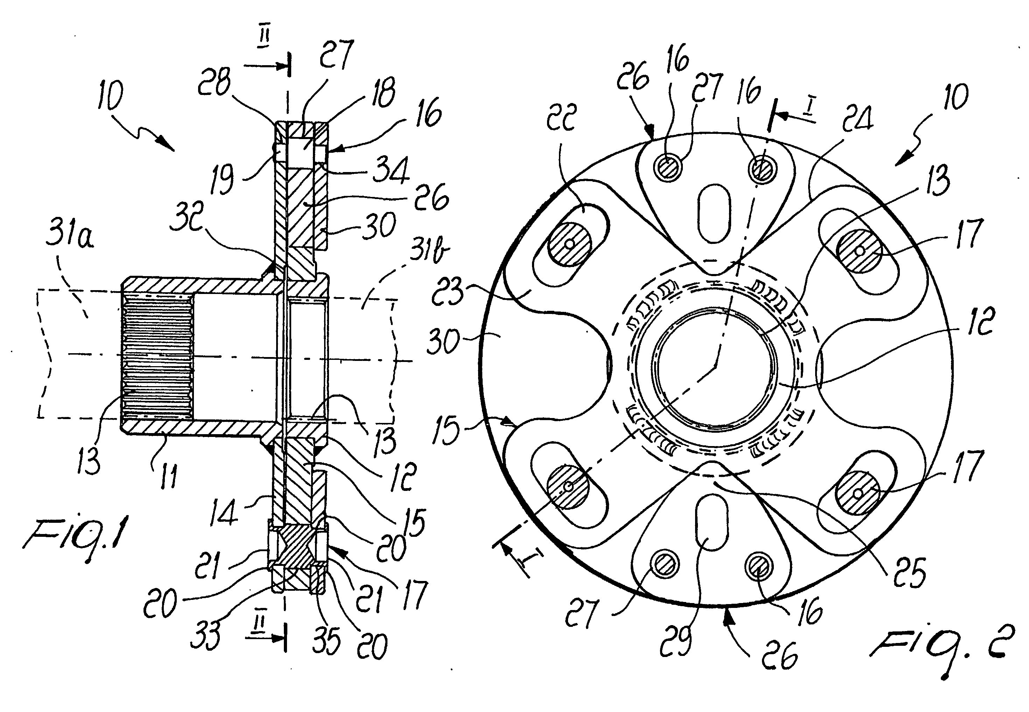

With reference to Figures 1 and 2, a coupling according to the invention is generally designated by the reference numeral 10.

Said coupling is constituted by two hubs 11 and 12 for connection to transmission shafts 31a and 31b, shown in dashed lines in the figure, by means of slots 13 provided on the internal surface of said hubs 11 and 12 and corresponding mating protrusions provided on the shafts 31a and 31b.

Two flanges, designated by the reference numerals 14 and 15 respectively, are welded on the hubs 11 and 12 so that they face each other.

The flange 14 is an annular element or ring which accommodates, in a circumferential direction, holes for the rigid fixing of pins 16 and 17; the pins 16 have a cylindrical central body 18 and cylindrical ends 19 which have a smaller diameter, while the pins 17 are cylindrical and have two dead holes 21, formed in their flat faces, which are coaxial to the axis of said pin 17, so as to form end edges 20 to be upset during assembly.

The pins 17 are four in number, are arranged along an ideal circle, are rigidly coupled to the holes of the flange 14 by upsetting one of the end edges 20, and are coupled, by way of their central part 33 which has a larger diameter than the outside diameter of the edges 20, to corresponding slotted circumferential holes 22.

The slotted holes 22 are provided in corresponding spokes 23 of the flange 15 which faces the flange 14.

Said spokes 23 are arranged in an X-shaped pattern, with a profile which is adapted to define two opposite recesses 24 so as to accommodate, in contact, the vertices 25 of blocks of elastomeric material 26 which are substantially triangular with convex edges.

The blocks 26 are thus arranged opposite, so that their vertices 25 are directed toward the center of the flanges 14 and 15, and each one is provided with two holes 27 for mating with the central body 18 of the pins 16, which are in turn rigidly coupled to the flange 14 by stable coupling of one of the ends 19 to corresponding holes 28 formed in said flange 14.

Moreover, the blocks 26 have, in their central region, radial slotted holes 29.

A covering ring 30 is arranged so as to face the flange 15 and is fixed by way of the free ends 19 of the pins 16, which are coupled with an interference fit to corresponding holes 34 formed in said ring, and by way of the end edges 20 of the pins 17, which are coupled to corresponding holes 35 of the ring and are then upset.

An annular elastic ring element 32 is further interposed between the flanges 14 and 15 and has an undulated surface for resting against the flanges; said annular element is assembled with a slight pre-loading, ensures the spacing of the two flanges 14 and 15 and at the same time constitutes a rotational brake.

In view of the configuration of the coupling 10, particularly of the way in which the pins 17 couple to the slotted holes 22, the hub 11 can undergo a relative rotation with respect to the hub 12 about its own axis of rotation.

Rotation can occur in both directions of rotation over an angle which depends on the extent of the load and on the length of the slotted holes 22 formed in the flange 15.

The length of the slotted holes 22 limits said relative rotation, forcing the coupling to transmit the torque rigidly.

The coupling 10 provides its elastic properties by virtue of the use of the blocks 26 made of elastomeric material.

The choice of the geometry of the blocks 26, and of the type of elastic material, in terms of elastic modulus, surface hardness and thermal characteristics, allows to achieve very different damping characteristics.

The most important feature, however, consists in that a relative rotation of the two coupled shafts according to a singular progression rule is allowed.

Said curve (applied momentum-rotational angle) is in fact characterized in that it has a portion which is initially linear and then gradually changes to an exponential trend.

Practical tests allow to determine a gradual rule of the coupling which can be described with a relation of the following kind:

$$M(\alpha) = A \cdot (\alpha^0 + 1) + C^{(\alpha^0 - B)}$$

where A, B and C are three coefficients which depend on the geometric and elastic characteristics of the coupling and $\alpha$ is the angle in degrees of the relative rotation between the two hubs.

In practice, it has been observed that the coupling thus described achieves the intended aim, i.e., to follow a well-defined progression rule of motion transmission.

The coupling has relatively small overall dimensions and differs from similar flexible couplings, i. e., couplings of equal power handling capacity, in that it is particularly compact.

Moreover, the coupling can be provided according to the most conventional machining processes, with a limited use of resources, thus ensuring low manufacturing costs and therefore low sales costs.

The invention thus conceived is susceptible of numerous modifications and variations, all of which are within the scope of the appended claims.

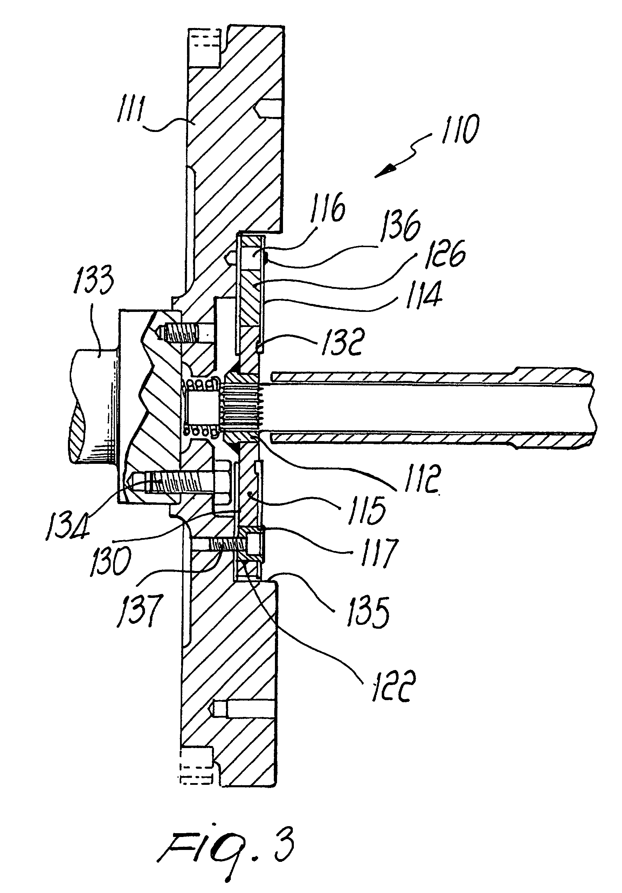

Thus, for example, with reference to Figure 3, another embodiment of a coupling according to the invention is generally designated by the reference numeral 110.

Said embodiment 110 differs from the preceding one 10 in that the flange 14 has been replaced by a thin ring 114 which faces the flange 115 and has a geometry which is similar to the ring 15, with an interposed elastic element 132 whose geometry and function are similar to those of the element 32, joined to a second ring 130 and then to a disk 111, whose diametrical dimension is much larger than those of the other elements, by way of bushes 117 which are in turn fixed by means of screws 137 to said disk 111.

The disk 111 is then rigidly connected to the shaft 133 through screws 134.

The bushes 117, like the pins 17, are arranged on the slotted holes 122 of the flange 115.

The blocks 126 made of elastomeric material, which are identical to the blocks 26, are again fixed by means of pins 116, which however now have a head 136 upset onto the flange 114.

In practice, the materials used, as well as the dimensions, may be any according to requirements.

All the details may further be replaced with other technically equivalent elements, insofar as they fall within the scope of the claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A flexible coupling for coaxial shafts, comprising two facing flanges (14,15;114,115), one for the driven shaft (31a) and one for the driving shaft (31b); blocks (26;126) of elastomeric material which are rigidly coupled between said flanges (14,15; 114,115), have a substantially triangular shape, are arranged radially, and are fixed to a flange (14;114) so that one vertex is directed toward the center of said flange (14;114); the other one of said flanges (15;115) being shaped so as to form recesses (24) for mating with said downward-facing vertices of the elastomeric blocks (26;126); said flexible coupling being **characterized in that** said elastomeric triangular blocks (26;126) have a geometric development which is substantially and prevailingly comprised in a plane parallel to said facing flanges (14,15;114,115).

2. The flexible coupling for coaxial shafts according to claim 1, **characterized in that** said elastomeric blocks (26) are two in number and are arranged in diametrically opposite positions.

3. The flexible coupling for coaxial shafts according to claims 1 and 2, **characterized in that** said triangular elastomeric blocks (26) have convex edges.

4. The flexible coupling for coaxial shafts according to claim 1, **characterized in that** said flange (15) shaped so as to form recesses (24) for coupling to the elastomeric blocks (26) has four spokes (23) arranged in an X-shaped pattern, said recesses (24) being formed between two pairs of diametrically opposite spokes (23), and faces the other flange (14) shaped as an annular ring.

5. The flexible coupling for coaxial shafts according to claims 1 to 4, **characterized in that** said blocks (26) are connected to the annular ring (14) by means of pins (16).

6. The flexible coupling for coaxial shafts according to claim 4, **characterized in that** said spokes (23) each have, at their ends, slotted holes (22) which lie along the same circumference.

7. The flexible coupling for coaxial shafts according to claim 6, **characterized in that** said slotted holes (22) are coupled to pins (17) which are fixed to the annular ring (14).

8. The flexible coupling for coaxial shafts according to claims 1 to 4, **characterized in that** said blocks (26) are provided with radially orientated slotted holes (29).

9. The flexible coupling for coaxial shafts according to one or more of the preceding claims, **characterized in that** a covering ring (30) faces the X-shaped flange (15) and is coupled to the coupling (10) by way of the pins (16) for fixing the blocks (26) and the pins (17) that couple to the circumferential slotted holes (22).

10. The flexible coupling for coaxial shafts according to one or more of the preceding claims, **characterized in that** a pre-loaded elastic ring (32) is interposed between the flanges (14, 15).

## Patentansprüche

1. Elastische Kupplung für koaxiale Wellen, umfassend zwei einander zugewandte Flansche (14, 15; 114, 115), einen für die Abtriebswelle (31a) und einen für die Antriebswelle (31b); Blöcke (26; 126) aus elastomerem Material, die starr zwischen den genannten Flanschen (14, 15; 114, 115) gekoppelt sind, eine im wesentlichen dreieckige Form haben, radial angeordnet und derart an einem Flansch (14; 114) befestigt sind, daß ein Scheitelpunkt zur Mitte des genannten Flansches (14; 114) gerichtet ist; wobei der andere der genannten Flansche (15; 115) derart geformt ist, daß er Aussparungen (24) zum Eingriff mit den genannten nach unten gerichteten Scheitelpunkten der elastomeren Blöcke (26; 126) ausbildet; wobei die elastische Kupplung **dadurch gekennzeichnet ist, daß** die genannten elastomeren dreieckigen Blöcke (26; 126) eine geometrische Ausbildung haben, die im wesentlichen und maßgeblich in einer Ebene enthalten ist, die parallel zu den genannten einander zugewandten Flanschen (14, 15; 114, 115) ist.

2. Elastische Kupplung für koaxiale Wellen nach Anspruch 1, **dadurch gekennzeichnet, daß** die genannten elastomeren Blöcke (26) zwei an der Zahl und in diametral entgegengesetzten Positionen angeordnet sind.

3. Elastische Kupplung für koaxiale Wellen nach den Ansprüchen 1 und 2, **dadurch gekennzeichnet, daß** die genannten dreieckigen elastomeren Blöcke (26) konvexe Kanten haben.

4. Elastische Kupplung für koaxiale Wellen nach Anspruch 1, **dadurch gekennzeichnet, daß** der genannte Flansch (15), der derart geformt ist, daß er Aussparungen (24) zum Ankuppeln an die elastomeren Blöcke (26) ausbildet, vier Speichen (23) hat, die in einem X-förmigen Muster angeordnet sind, wobei die genannten Aussparungen (24) zwischen zwei Paaren von diametral entgegengesetzten Speichen (23) ausgebildet sind, und dem anderen Flansch (14), der als kreisförmiger Ring ausgebildet ist, zugewandt ist.

5. Elastische Kupplung für koaxiale Wellen nach den Ansprüchen 1 bis 4, **dadurch gekennzeichnet, daß** die genannten Blöcke (26) mit Hilfe von Stiften (16) mit dem kreisförmigen Ring (14) verbunden sind.

6. Elastische Kupplung für koaxiale Wellen nach Anspruch 4, **dadurch gekennzeichnet, daß** die genannten Speichen (23) an ihren Enden jeweils Schlitzlöcher (22) haben, die entlang dem gleichen Umfang liegen.

7. Elastische Kupplung für koaxiale Wellen nach Anspruch 6, **dadurch gekennzeichnet, daß** die Schlitzlöcher (22) an Stifte (17) angekuppelt sind, die an dem kreisförmigen Ring (14) befestigt sind.

8. Elastische Kupplung für koaxiale Wellen nach den Ansprüchen 1 bis 4, **dadurch gekennzeichnet, daß** die genannten Blöcke (26) mit radial ausgerichteten Schlitzlöchern (29) versehen sind.

9. Elastische Kupplung für koaxiale Wellen nach einem oder mehreren der vorhergehenden Ansprüche, **dadurch gekennzeichnet, daß** ein Abdeckring (30) dem X-förmigen Flansch (15) zugewandt und an die Kupplung (10) durch die Stifte (16) zum Befestigen der Blöcke (26) und die Stifte (17) gekuppelt ist, die sich an die am Umfang angeordneten Schlitzlöcher (22) ankuppeln.

10. Elastische Kupplung für koaxiale Wellen nach einem oder mehreren der vorhergehenden Ansprüche, **dadurch gekennzeichnet, daß** ein vorgespannter elastischer Ring (32) zwischen den Flanschen (14, 15) angeordnet ist.

## Revendications

1. Accouplement flexible pour des arbres coaxiaux, comprenant deux plateaux se faisant face (14, 15 ; 114, 115), l'un pour l'arbre mené (31a) et l'autre pour l'arbre moteur (31b) ; des blocs (26 ; 126) en matière élastomère qui sont rigidement couplés entre lesdits plateaux (14, 15 ; 114, 115), ont une forme sensiblement triangulaire, sont agencés radialement et sont fixés à un plateau (14 ; 114) de sorte qu'un sommet est dirigé vers le centre dudit plateau (14 ; 114) ; l'autre desdits plateaux (15 ; 115) étant façonné pour former des évidements (24) pour s'adapter auxdits sommets faisant face vers le bas des blocs en élastomère (26 ; 126) ; ledit accouplement flexible étant **caractérisé en ce que** lesdits blocs triangulaires en élastomère (26 ; 126) ont un développement géométrique qui est, de façon substantielle et prédominante, compris dans un plan parallèle auxdits plateaux se faisant face (14, 15 ; 114, 1 15).

2. Accouplement flexible pour des arbres coaxiaux selon la revendication 1, **caractérisé en ce que** lesdits blocs en élastomère (26) sont au nombre de deux et sont agencés dans des positions diamétralement opposées.

3. Accouplement flexible pour des arbres coaxiaux selon les revendications 1 et 2, **caractérisé en ce que** lesdits blocs en élastomère triangulaires (26) ont des bords convexes.

4. Accouplement flexible pour des arbres coaxiaux selon la revendication 1, **caractérisé en ce que** ledit plateau (15), façonné pour former des évidements (24) pour l'accouplement des blocs en élastomère (26), présente quatre rayons (23) agencés selon un motif en X, lesdits évidements (24) étant formés entre deux paires de rayons diamétralement opposés, et fait face à l'autre plateau (14) façonné comme une bague annulaire.

5. Accouplement flexible pour des arbres coaxiaux selon les revendications 1 à 4, **caractérisé en ce que** lesdits blocs (26) sont reliés à la bague annulaire (14) par l'intermédiaire d'axes (16).

6. Accouplement flexible pour des arbres coaxiaux selon la revendication 4, **caractérisé en ce que** lesdits rayons (23) ont chacun, à leurs extrémités, des trous oblongs (22) qui s'étendent le long de la même circonférence.

7. Accouplement flexible pour des arbres coaxiaux selon la revendication 6, **caractérisé en ce que** lesdits trous oblongs (22) sont couplés à des axes (17) qui sont fixés à la bague annulaire (14).

8. Accouplement flexible pour des arbres coaxiaux selon les revendications 1 à 4, **caractérisé en ce que** lesdits blocs (26) sont munis de trous oblongs orientés radialement (29).

9. Accouplement flexible pour des arbres coaxiaux selon l'une ou plusieurs des revendications précédentes,

**caractérisé en ce qu'**une bague de recouvrement (30) fait face au plateau en forme de X (15) et est associée à l'accouplement (10) par l'intermédiaire des axes (16) pour fixer les blocs (26) et des axes (17) qui s'associent aux trous oblongs circonférentiels (22).

10. Accouplement flexible pour des arbres coaxiaux selon l'une ou plusieurs des revendications précédentes,

**caractérisé en ce qu'**une bague élastique préchargée (32) est disposée entre les plateaux (14, 15).

Fig. 2

Fig. 1

FIg. 3